(19) Europäisches Patentamt / European Patent Office / Office européen des brevets

(11) **EP 3 873 725 B1**

(12) **FASCICULE DE BREVET EUROPEEN**

(45) Date de publication et mention
de la délivrance du brevet:
**11.10.2023 Bulletin 2023/41**

(21) Numéro de dépôt: **19795015.7**

(22) Date de dépôt: **30.10.2019**

(51) Classification Internationale des Brevets (IPC):
**B29C 70/88** (2006.01)    **B29C 70/24** (2006.01)
**B29D 99/00** (2010.01)    **B29L 31/08** (2006.01)
**B64C 11/20** (2006.01)    **D03D 25/00** (2006.01)
**F01D 5/28** (2006.01)    **F01D 21/04** (2006.01)

(52) Classification Coopérative des Brevets (CPC):
**B29C 70/24; B29C 70/887; B29D 99/0025;**
**D03D 25/005; F01D 5/282; F01D 21/045;**
B29L 2031/082; B64C 11/20; D10B 2505/02;
F05D 2220/36; F05D 2300/6031; F05D 2300/6034;
Y02T 50/60

(86) Numéro de dépôt international:
**PCT/EP2019/079748**

(87) Numéro de publication internationale:
**WO 2020/089345 (07.05.2020 Gazette 2020/19)**

(54) **AUBE DE SOUFFLANTE D'UNE TURBOMACHINE ET UNE TELLE SOUFFLANTE**

SCHAUFEL EINES FANS EINER TURBOMASCHINE UND EIN SOLCHER FAN

BLADE OF FAN OF A TURBOMACHINE AND SUCH A FAN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.10.2018 FR 1860029**

(43) Date de publication de la demande:
**08.09.2021 Bulletin 2021/36**

(73) Titulaire: **SAFRAN AIRCRAFT ENGINES**
**75015 Paris (FR)**

(72) Inventeurs:
• **DE GAILLARD, Thomas Alain**
**77550 Moissy-Cramayel (FR)**
• **NOTARIANNI, Gilles, Pierre-Marie**
**7755077550 Moissy-Cramayel (FR)**
• **POUZADOUX, Frédéric, Jean-Bernard**
**77550 Moissy-Cramayel (FR)**

(74) Mandataire: **Regimbeau**
**20, rue de Chazelles**
**75847 Paris Cedex 17 (FR)**

(56) Documents cités:
**EP-A1- 3 292 991**    **US-A1- 2007 189 902**
**US-B2- 9 670 788**

# Description

## DOMAINE DE L'INVENTION

L'invention concerne de manière générale le domaine des turbomachines, et plus particulièrement celui des aubes de soufflantes de ces turbomachines.

L'invention s'applique plus particulièrement aux aubes de soufflante en matériau composite et leur interaction avec l'entrée de la veine primaire.

## ARRIERE-PLAN TECHNOLOGIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

Lors de la certification et de la vie d'un moteur, les aubes de soufflante sont soumises à des ingestions d'oiseaux et de grêlons. Toutefois, selon le type de l'objet impactant l'aube (et notamment sa taille, sa masse) et selon le type de soufflante (vitesse de rotation et nombre d'aubes), les zones privilégiées d'initiation et de propagation des endommagements sont différentes. Le comportement mécanique des aubes de soufflante est donc optimisé pendant la phase de conception des aubes pour respecter les règles de certification.

Par ailleurs, les conceptions actuelles tendent à réduire l'épaisseur de la structure en matériau composite des aubes dans les zones du bord d'attaque, du bord de fuite voire sur l'ensemble de la structure afin d'améliorer les performances aérodynamiques. A iso-matériau et iso-loi d'empilage, la capacité de l'aube à résister à un impact se trouve par conséquent réduite. EP3292991 A1 divulgue une aube selon le préambule de la revendication 1.

## RESUME DE L'INVENTION

Un objectif de l'invention est donc de remédier aux inconvénients précités, en proposant une aube de soufflante pour une turbomachine dont le comportement à l'ingestion est amélioré.

Pour cela, l'invention propose une aube de soufflante d'une turbomachine selon la revendication 1.

Certaines caractéristiques préférées mais non limitatives de l'aube décrite ci-dessus sont les suivantes, prises individuellement ou en combinaison :

- la deuxième portion comprend des torons de chaîne et des torons de trame, les torons de chaîne et/ou les torons de trame de ladite deuxième portion étant dépourvus de premiers torons.

- la première portion s'étend sur une distance égale à au moins 30 % d'une hauteur de l'aube, par exemple sur une distance comprise entre 30 % et 65 % de la hauteur de l'aube.
- le renfort fibreux comprend une troisième portion s'étendant entre la première portion et la deuxième portion, une densité des deuxièmes torons augmentant progressivement dans la troisième portion de la première portion vers la deuxième portion.
- la troisième portion s'étend sur une distance comprise entre 5 % et 30 % d'une hauteur de l'aube.
- la troisième portion s'étend sur une distance comprise entre 1 cm et 10 cm.
- le renfort fibreux est obtenu par tissage tridimensionnel de torons de chaîne et de torons de trame, lesdits torons de chaîne définissant une pluralité de plans de chaîne, chaque plan de chaîne du renfort fibreux étant séparé d'un plan de chaîne immédiatement adjacent par une ligne de torons de trame, au plus 30 % des torons de chaîne et/ou de trame de la troisième portion étant modifiés entre deux plans de chaîne immédiatement adjacents.
- entre 5 % et 15 % de torons de chaîne et/ou de trame de la troisième portion sont modifiés entre deux plans de chaîne immédiatement adjacents.
- les premiers torons présentent un module d'Young supérieure au module d'Young des deuxièmes torons.
- l'allongement à la rupture des deuxièmes torons est compris entre 1.5 et 3 fois l'allongement à la rupture des premiers torons.
- les premiers torons comprennent des fibres de carbone ou d'aramide dont le module d'Young est supérieur à 250 GPa et l'allongement à la rupture est compris entre 1.5 % et 2.5 %.
- l'allongement à la rupture des deuxièmes torons est compris entre 3 % et 6 %, de préférence entre 4 % et 5 %.
- les deuxièmes torons comprennent des fibres de verre ou des fibres d'aramide ou des fibres de basalte.
- les deuxièmes torons comprennent des fils de chaîne et/ou des fils de trame.

Selon un deuxième aspect, l'invention propose également une soufflante pour une turbomachine comprenant une pluralité d'aubes conformes à l'une des revendications 1 à 14.

## BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1 est une vue schématique représentant un exemple de renfort fibreux pour une aube de soufflante conforme à un mode de réalisation, sur laquelle l'introduction de deuxièmes torons et la sortie de premiers torons dans la portion intermédiaire ont été schématisés.

La figure 2 est une vue schématique représentant un exemple de renfort fibreux pour une aube de soufflante sur laquelle des torons de trame et quatre plans de chaîne du renfort fibreux de l'aube ont été schématisés.

Les figures 2a à 2d illustrent schématiquement les quatre plans de chaîne représentés sur la figure 2.

La figure 2e illustre schématiquement un plan de trame partiel du renfort fibreux de la figure 2.

La figure 3 est une vue en perspective d'un exemple de réalisation d'une soufflante comprenant des aubes conforme à l'invention.

## DESCRIPTION DETAILLEE D'UN MODE DE REALISATION

Dans la présente demande, l'amont et l'aval sont définis par rapport au sens d'écoulement normal du gaz dans la soufflante 1 à travers la turbomachine. Par ailleurs, on appelle axe de révolution de la soufflante 1, l'axe X de symétrie radiale de la soufflante 1. La direction axiale correspond à la direction de l'axe X de la soufflante 1, et une direction radiale est une direction perpendiculaire à cet axe et passant par lui. Enfin, on utilisera interne et externe, respectivement, en référence à une direction radiale de sorte que la partie ou la face interne d'un élément est plus proche de l'axe X que la partie ou la face externe du même élément.

Une soufflante 1 de turbomachine comprend un disque 2 de soufflante portant une pluralité d'aubes 3 de soufflante 1, associées à des plateformes inter-aubes.

Chaque aube 3 comprend une structure en matériau composite comportant un renfort fibreux 5 obtenu par tissage tridimensionnel et une matrice dans laquelle est noyé le renfort fibreux 5.

Cette structure en matériau composite comprend un pied 6, une pale 7 à profil aérodynamique présentant un bord d'attaque 4 et un sommet 8, et une échasse s'étendant entre le pied et la pale. Le bord d'attaque 4 correspond au bord de la pale 7 qui est configuré pour s'étendre en regard de l'écoulement des gaz entrant dans la soufflante 1.

Enfin, la structure est formée d'une pluralité de sections d'aube empilées depuis le pied 6 selon un axe d'empilement Z s'étendant radialement par rapport à l'axe de révolution X de la soufflante 1.

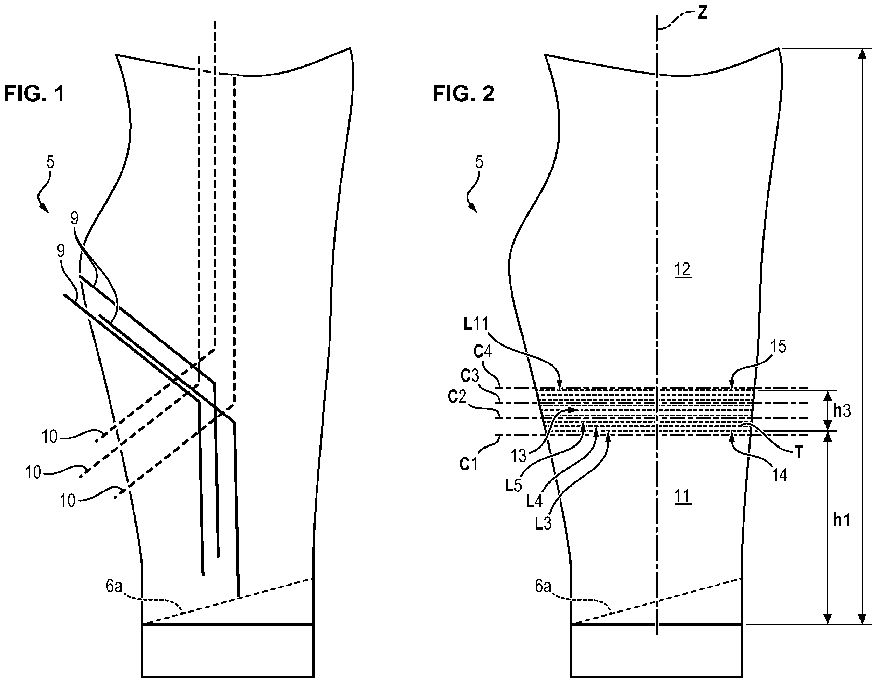

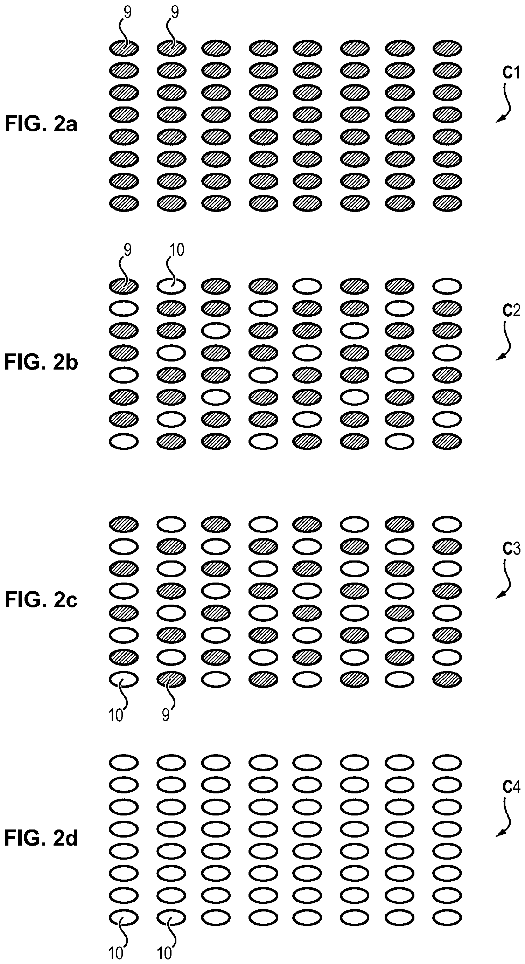

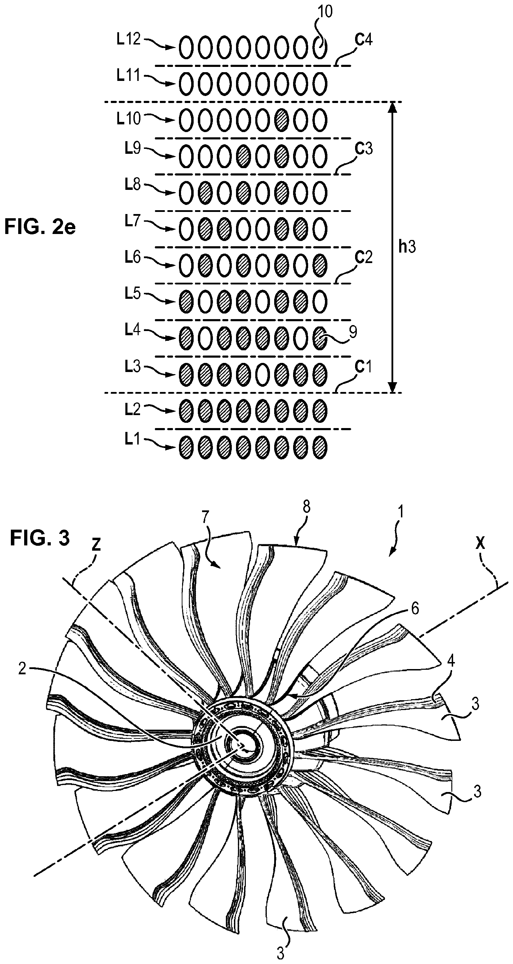

Le pied 6 de chaque aube 3 est engagé dans une rainure axiale formée dans le disque 2 de soufflante. La pale 7 à profil aérodynamique quant à elle est propre à être placée dans un flux d'air, lorsque le moteur est en fonctionnement de sorte à diviser l'écoulement d'air en un écoulement d'intrados et en un écoulement extrados afin de générer une portance. L'aube 3 présente une hauteur h correspondant à une dimension suivant l'axe d'empilement Z des sections d'aube entre le pied 6 et le sommet 8. La hauteur h peut par exemple être mesurée à l'intersection entre le bord d'attaque 4 et la limite inférieure de la pale 7 (qui correspond à son interface avec l'échasse, juste au-dessus du pied pour ce qui concerne la zone du bord d'attaque 4). En particulier, un pourcentage de hauteur est considéré avec la hauteur totale de l'aube mesurée depuis l'extrémité intérieure du bord d'attaque 4, à savoir au raccordement du bord d'attaque 4 avec la plateforme agencée côté intérieur de la veine aérodynamique, jusqu'à l'extrémité du bord d'attaque 4 en tête d'aube. A la figure 2 qui représente la préforme, l'emplacement de plateforme est symbolisé par un trait en pointillés et repéré par une référence 6a.

Le renfort fibreux 5 peut être formé à partir d'une préforme fibreuse en une seule pièce obtenue par tissage tridimensionnel ou multicouche avec épaisseur évolutive. Il comprend des fibres qui peuvent notamment être en carbone, en verre, en basalte, en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARRTM (pour Vacuum Resin Transfer Molding).

Le renfort fibreux 5 comprend des premiers torons 9 présentant un allongement à la rupture prédéfini et des deuxièmes torons 10 présentant un allongement à la rupture supérieur à celui des premiers torons 9. Le renfort fibreux 5 est donc obtenu par hybridation des torons le constituant afin d'utiliser au mieux les propriétés mécaniques de chaque toron en fonction des zones de l'aube 3 et du type de sollicitation.

Les premiers torons 9 ont de préférence un module d'Young élevé, par exemple supérieur à 250 GPa, et ont pour fonction de permettre de respecter les critères de conception de l'aube 3, et notamment le statut fréquentiel de l'aube 3. Ces premiers torons 9 sont donc utilisés dans le tissage du renfort fibreux 5 pour former la portion du renfort 5 (ou portion interne 11) qui comprend le pied 6 de l'aube 3 et une partie inférieure de la pale 7, correspondant au moins aux parties basses et épaisses de l'aube 3, pour que les fréquences propres de l'aube 3 soient élevées. Cela permet ainsi de limiter ou du moins d'éloigner les croisements fréquentiels entre les premiers modes propres de l'aube 3, énergétiques, et les harmoniques moteur. Les parties basses et épaisses comprennent ici le pied 6 de l'aube 3 et la partie inférieure de la pale 7. Dans une forme de réalisation, seuls les premiers torons 9 sont utilisés comme fils de chaîne et de trame dans le tissage de la portion interne 11.

Les deuxièmes torons 10 quant à eux, dont la résistance à la rupture est plus grande que celle des premiers torons 9, ont pour fonction de limiter l'initiation et la propagation des endommagements de l'aube 3 lors d'ingestion d'objets, et notamment d'oiseaux. Ces deuxièmes torons 10 sont donc utilisés dans le tissage du renfort fibreux 5 pour former la portion du renfort 5 (ou portion externe 12) qui comprend le sommet 8. De préférence, l'allongement à la rupture des deuxièmes torons 10 est compris entre 1.5 et 3 fois l'allongement à la rupture des premiers torons 9. Dans une forme de réalisation, seuls les deuxièmes torons 10 sont utilisés comme fils de chaîne et de trame dans le tissage de la portion externe 12.

Le renfort 5 comprend en outre une portion intermédiaire 13 s'étendant entre la portion interne 11 et la portion externe 12 qui est formée à la fois par les premiers torons 9 et les deuxièmes torons 10. Dans une forme de réalisation, seuls les premiers et deuxièmes torons 9, 10 sont utilisés comme fils de chaîne et de trame dans le tissage de la portion intermédiaire 13.

Cette portion intermédiaire 13 est configurée pour servir d'interface entre la première portion 11 et la deuxième portion 12 afin de limiter les fragilités dues à des discontinuités de matériaux. Lorsque le renfort fibreux 5 comprennent uniquement des premiers torons 9 dans la première portion 11 de l'aube 3 et uniquement des deuxièmes torons 10 dans la deuxième portion 12 de l'aube 3, et que la première portion 11 et la deuxième portion 12 sont bout à bout dans le renfort 5, l'aube 3 ainsi obtenue permet effectivement d'éviter les endommagements de l'aube 3 dans les zones comprenant les deuxièmes torons 10. Toutefois, le Demandeur s'est aperçu du fait qu'en l'absence de portion intermédiaire 13, c'est-à-dire en introduisant de manière abrupte des deuxièmes torons 10 et en supprimant simultanément les premiers torons 9 à l'interface entre la première portion 11 et la deuxième portion 12 du renfort fibreux 5, l'aube 3 obtenue risquait d'être fortement endommagée au niveau de cette interface en cas d'impact, car l'interface entre les deux portions 11, 12 du renfort 5 est fragilisée par la discontinuité forte des propriétés matériaux.

La portion intermédiaire 13 permet ainsi de faire une transition entre les propriétés matériaux de la portion interne 11 et les propriétés matériaux de la portion externe 12. Pour cela, la densité des deuxièmes torons 10 est progressivement augmentée au sein de la portion intermédiaire 13 de la portion interne 11 vers la portion externe 12. Plus précisément, à l'interface 14 entre la portion interne 11 et la portion intermédiaire 13, la densité des deuxièmes torons 10 est très faible tandis que la densité des premiers torons 9 est très forte. En revanche, à l'interface 15 entre la portion intermédiaire 13 et la portion externe 12, la densité des deuxièmes torons 10 est très forte tandis que la densité des premiers torons 9 est très faible.

Les figures 1 et 2 représentent schématiquement une aube 3 dont le renfort fibreux 5 a été mis en forme à partir d'une préforme fibreuse tissée tridimensionnelle, avant injection de résine ou densification par une matrice et usinage éventuel, afin d'obtenir une aube 3 de soufflante 1 en matériau composite conforme à l'invention. Par tissage tridimensionnel, on comprendra que les fils de chaîne suivent des trajets sinueux afin de lier entre eux des fils de trame appartenant à des couches de fils de trame différentes exception faite de déliaisons, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755.

Afin de réaliser la portion interne 11, la portion intermédiaire 13 et la portion externe 12 en une seule pièce, les premiers torons 9 peuvent être sortis successivement du tissage de la préforme, au niveau des différents plans de chaîne de la portion intermédiaire 13, et coupés au niveau de la surface de la préforme avant injection, tandis que les deuxièmes torons 10 sont introduits progressivement dans ces plans de chaîne (voir figure 1).

Quatre exemples de plans de chaîne C1, C2, C3, C4 ont été représentés sur la figure 2. Un plan de chaîne C1-C4 est une vue en coupe de la préforme fibreuse suivant un plan normal à l'axe d'empilement Z. Dans le renfort fibreux 5, chaque plan de chaîne C1 à C4 est séparé du plan de chaîne immédiatement adjacent par une ligne de torons de trame. Sur la figure 2, les plans de chaîne C1 à C4 qui ont été représentés sont espacés deux à deux par trois lignes de torons de trame (L3 à L11).

Par ailleurs, les figure 2a à 2d illustrent chacune l'un de ces quatre plans de chaîne C1-C4, dans lesquels seuls les torons de chaîne (c'est-à-dire dans la direction d'empilement des sections) ont été représentés, les torons de trame ayant été omis afin de simplifier la lecture des figures. Ces figures illustrent de manière schématique un premier exemple d'hybridation des torons, dans lequel les deuxièmes torons 10 sont insérés en chaîne.

Comme on peut le voir sur la figure 2a, le premier plan de chaîne C1, qui fait partie de la portion interne 11 du renfort fibreux 5, ne comprend que des premiers torons 9. Ce premier plan de chaîne C1 se situe à l'interface 14 avec la portion intermédiaire 13 du renfort 5.

Le deuxième plan de chaîne C2 (figure 2b) fait partie de la portion intermédiaire 13 du renfort fibreux 5, à proximité de son interface 14 avec la portion interne 11. Ce deuxième plan de chaîne C2 comprend deux fois plus de premiers torons 9 que de deuxièmes torons 10.

Le troisième plan de chaîne C3 (figure 2c) fait partie de la portion intermédiaire 13 du renfort fibreux 5, à proximité de son interface 15 avec la portion externe 12. Ce troisième plan de chaîne C3 comprend deux fois plus de deuxièmes torons 10 que de premiers torons 9.

Le quatrième plan de chaîne C4 (figure 2d) fait partie de la portion externe 12 du renfort fibreux 5, à l'interface 15 avec la portion intermédiaire 13, et ne comprend que des deuxièmes torons 10.

Un deuxième exemple d'hybridation des torons, dans lequel les deuxièmes torons 10 sont insérés en trame, a été illustré en figure 2e. Un plan de trame est une vue en coupe de la préforme fibreuse suivant un plan comprenant l'axe d'empilement Z et sensiblement aligné avec l'axe X de rotation de la soufflante 1. Le plan de trame est ici compris dans la feuille. Un plan de trame est formé d'une pluralité de lignes de torons de trame L1-L12, chaque ligne de torons de trame étant séparée de la ligne de torons de trame immédiatement adjacente par un plan de chaîne (les plans C1 à C4 étant illustrés ici). On notera que, de manière analogue aux figures 2a à 2d, seuls les torons de trame (c'est-à-dire dans la direction sensiblement axiale) ont été représentés sur la figure 2e, les torons de chaîne ayant été omis afin de simplifier la lecture de la figure.

Comme on peut le voir sur cette figure 2e, les deux premières lignes de torons de trame L1 et L2, qui font partie de la portion interne 11 du renfort fibreux 5, ne comprennent que des premiers torons 9. Ces deux premières lignes de torons de trame L1, L2 se situent à l'interface 14 avec la portion intermédiaire 13 du renfort 5.

La troisième ligne de torons de trame L3 fait partie de la portion intermédiaire 13 du renfort fibreux 5, à proximité de son interface 14 avec la portion interne 11. Cette troisième ligne de torons de trame L3 comprend un seul deuxième toron. Les lignes de torons de trame suivantes L4-L10 comprennent chacune un deuxième toron en plus que la ligne de torons de trame qui la précède immédiatement, jusqu'à la onzième ligne de torons de trame L11 et les suivantes qui ne comprennent que des deuxièmes torons 10 et forment donc partie de la portion externe 12 du renfort 5.

De manière générale, afin d'assurer la transition des propriétés mécaniques entre la portion interne 11 et la portion externe 12 du renfort 5, au plus 30 % des torons de chaîne et/ou de trame sont de préférence modifiés entre deux plans de chaîne immédiatement adjacents (c'est-à-dire séparés par uniquement une ligne de trame T). Ainsi, entre deux plans de chaîne successifs, au plus 30 % des premiers torons 9 sont sortis de la préforme fibreuse formant le renfort fibreux 5 et découpés en surface, et autant de deuxièmes torons 10 sont introduits dans la préforme fibreuse depuis la surface afin de remplacer les premiers torons 9 sortis, qu'il s'agisse de torons de chaîne ou de torons de trame. De préférence, entre 5 % et 15 % des torons sont modifiés entre deux plans immédiatement adjacents. On notera que, dans une variante de réalisation, à la fois des torons de chaîne et des torons de trame peuvent être remplacés entre deux plans de chaîne successifs de la portion intermédiaire 13. Cela revient donc à combiner le premier et le deuxième exemple de réalisation décrits ci-dessus.

La hauteur h3 (distance suivant l'axe d'empilement Z entre les interfaces 14 et 15) de la portion intermédiaire 13 est déterminée en fonction du dimensionnement de l'aube 3, et plus particulièrement de la combinaison stratégie fréquentielle/dimensionnement en ingestion choisie.

De manière générale, la portion interne 11 s'étend depuis le pied de l'aube 3 sur une distance au moins égale à 30 % de la hauteur h de l'aube 3 afin que la zone épaisse de l'aube 3 soit suffisamment raide (grâce au haut module d'Young et au faible allongement à la rupture des premiers torons 9) pour garantir le respect des critères de conception de l'aube 3 et notamment le statut fréquentiel.

Si la raideur de l'aube 3 le permet, l'interface 14 entre la portion interne 11 et la portion intermédiaire 13 peut être positionnée à une distance h1 (suivant l'axe d'empilement Z, mesurée depuis la limite inférieure de la pale 7) comprise entre 30 % et 65 % de la hauteur h de l'aube 3. L'introduction des deuxièmes torons 10 permet alors d'améliorer le comportement de l'aube 3 contre des impacts d'oiseaux lourds (les zones d'impact et de concentration des endommagements liés à l'ingestion de ces oiseaux étant situées à une distance du pied de l'aube 3 comprise entre 30 % et 70 % de la hauteur h de l'aube 3) mais également contre des impacts d'oiseaux de taille moyenne (medium birds en anglais), dont les endommagements les plus critiques se trouvent dans la zone de l'aube 3 s'étendant sur une distance comprise entre 70 % et 100% de la hauteur h de l'aube 3.

En revanche, lorsque l'aspect fréquentiel ou vibratoire exige de conserver une certaine raideur dans l'aube 3, la distance h1 entre le pied de l'aube et l'interface 14 à partir de laquelle des deuxièmes torons 10 sont introduits dans le renfort fibreux 5 peut être supérieure à 65 % de la hauteur h de l'aube 3. L'introduction des deuxièmes torons 10 dans la portion supérieure de l'aube 3, à compter d'une distance h1 supérieure à 65 % de la hauteur h de l'aube 3, réduit la raideur de l'aube 3. Toutefois, cette chute de raideur n'a qu'un faible impact sur les fréquences propres de l'aube 3 et les dévrillages en sommet 8 d'aube 3. Par ailleurs, elle améliore la tenue contre des impacts d'oiseaux de taille moyenne et légers grâce à leur allongement à la rupture.

Il en découle que le dimensionnement de l'aube 3 permet de déterminer la position de l'interface 14 entre la portion interne 11 et la portion intermédiaire 13, et plus précisément la distance h1 à partir de laquelle des deuxièmes torons 10 peuvent être introduits dans le renfort fibreux, et donc, afin d'allier raideur nécessaire pour le statut fréquentiel (premiers torons 9) et allongement à rupture (deuxièmes torons 10) pour la tenue à l'ingestion.

La hauteur h3 de la portion intermédiaire 13 est comprise entre 5 % et 30 % de la hauteur h de l'aube 3. Ainsi, la hauteur h3 de la portion intermédiaire 13 peut être comprise entre un centimètre et dix centimètres. La hauteur h3 de la portion intermédiaire 13 peut être déterminé en fonction de l'espacement entre les plans de chaînes et le pourcentage de modification de torons entre deux plans de chaines successifs. Par exemple, pour un espacement E entre deux plans de chaines égal à trois millimètres et un pourcentage P de modifications de torons entre deux plans de chaine égal à 10%, la hauteur h3 peut être définie comme suit :

$$h3 = E / P = 30mm$$

Dans une forme de réalisation, les premiers torons 9 présentent un module d'Young E élevé, c'est-à-dire supérieur à 250 GPa, de préférence supérieur à 270 GPa. Leur allongement à la rupture A est par ailleurs compris entre 1.5 % et 2.5 %.

Par exemple, les premiers torons 9 peuvent comprendre des fibres de carbone, typiquement des fibres de carbone HS* T300 (E = 284 GPa, A = 1.5 %), HS TR30S (E = 356 GPa, A = 1.9 %) ou HS T700 (E = 395 GPa, A = 2.1 %) ou encore des fibres d'aramide à haut module du type Dupont Kevlar 49 (E = 302, A = 2.4 %).

Les deuxièmes torons 10 peuvent alors présenter un allongement à la rupture compris entre 3 % et 6 %, de préférence entre 4 % et 5 %. Par exemple, les deuxièmes torons 10 peuvent comprendre des fibres de verre, typiquement des fibres de verre du type E-GLASS (E = 165 GPa, A = 4.4 %) ou des fibres de verre du type S-2 GLASS (E = 267 GPa, A = 5.2 %), ou des fibres de basalte (E = 227 GPa, A = 3 %) ou encore des fibres polyester (E = 268, A = 3.5 %).

De manière générale, les configurations décrites sont valables pour des moteurs dont la soufflante peut avoir un diamètre extérieur de l'ordre de 1,8 mètre à 3 mètres. Le nombre d'aubes de la soufflante peut être égal par à 16 ou 18. Quel que soit le diamètre de la soufflante, le nombre d'aubes de soufflante sera réduit autant que possible. Parmi différents critères, un choix de paramètres (notamment de la distance h1) dépendra plus particulièrement du comportement de l'aube de soufflante et de la combinaison « fréquentielle/dimensionnement en ingestion ». En effet, pour une même cible moteur, il est possible de choisir des différentes stratégies de comportements fréquentiels ou réponses fréquentielles en différents cas d'ingestions, par exemple pour repousser les réponses d'aube et d'aubage en évitant des croisements vibratoires avec des harmoniques énergétiques du moteur. Par exemple, il est possible de faire des choix de manière à positionner ces croisements au niveau de régimes moteur transitoires.

L'hybridation des torons du renfort fibreux 5 permet en outre d'ouvrir le champ de conception grâce à l'apport supplémentaire en tenue mécanique. Par exemple, il devient possible d'affiner le profil de l'aube 3 au niveau du bord d'attaque 4 ou du bord de fuite ou sur toute sa hauteur h en comparaison avec une aube 3 ne comprenant que des premiers torons 9 (à haut module d'Young), ce qui permet d'optimiser la masse de l'aube 3 et les performances aérodynamiques de la soufflante 1 (en obtenant des profils plus fins ou en réduisant le rapport de moyeu, qui est lié à la baisse de l'effort centrifuge induit par la masse de l'aube 3).

**Revendications**

1. Aube (3) de soufflante (1) d'une turbomachine comprenant une structure en matériau composite comprenant un renfort fibreux (5) obtenu par tissage tridimensionnel et une matrice dans laquelle est noyé le renfort fibreux (5), le renfort fibreux (5) comprenant des premiers torons (9) présentant un allongement à la rupture prédéfini, ladite aube (3) comprenant en outre un pied (6) et un sommet (8), le renfort fibreux (5) comprenant une première portion (11) comprenant le pied (6) et une deuxième portion (12) comprenant le sommet (8), une partie du renfort fibreux (5) comprenant des deuxièmes torons (10) présentant un allongement à la rupture supérieur à celui des premiers torons (9), l'aube étant **caractérisée en ce que** la première portion (11) est dépourvue de deuxième torons tandis que la deuxième portion (12) comprend les deuxièmes torons (10).

2. Aube (3) selon la revendication 1, dans laquelle la deuxième portion (12) comprend des torons de chaîne et des torons de trame, les torons de chaîne et/ou les torons de trame de ladite deuxième portion (12) étant dépourvus de premiers torons (9).

3. Aube (3) selon l'une des revendications 1 ou 2, dans laquelle la première portion (11) s'étend sur une distance égale à au moins 30 % d'une hauteur (h) de l'aube (3), par exemple sur une distance comprise entre 30 % et 65 % de la hauteur (h) de l'aube (3).

4. Aube (3) selon l'une des revendications 1 à 3, dans laquelle le renfort fibreux (5) comprend une troisième portion (13) s'étendant entre la première portion (11) et la deuxième portion (12), une densité des deuxièmes torons (10) augmentant progressivement dans la troisième portion (13) de la première portion (11) vers la deuxième portion (12).

5. Aube (3) selon la revendication 4, dans laquelle la troisième portion (13) s'étend sur une distance (h3) comprise entre 5 % et 30 % d'une hauteur (h) de l'aube (3).

6. Aube (3) selon l'une des revendications 4 ou 5, dans laquelle la troisième portion (13) s'étend sur une distance (h3) comprise entre 1 cm et 10 cm.

7. Aube (3) selon l'une des revendications 4 à 6, dans laquelle le renfort fibreux (5) est obtenu par tissage tridimensionnel de torons de chaîne et de torons de trame, lesdits torons de chaîne définissant une pluralité de plans de chaîne (C1-C4), chaque plan de chaîne (C1-C4) du renfort fibreux (5) étant séparé d'un plan de chaîne (C1-C4) immédiatement adjacent par une ligne de torons de trame (L1-L12), au plus 30 % des torons de chaîne et/ou de trame de la troisième portion étant modifiés entre deux plans de chaîne (C1-C4) immédiatement adjacents.

8. Aube (3) selon la revendication 7, dans laquelle entre 5 % et 15 % de torons de chaîne et/ou de trame de la troisième portion sont modifiés entre deux plans de chaîne (C1-C4) immédiatement adjacents.

9. Aube (3) selon l'une des revendications 1 à 8, dans laquelle les premiers torons (9) présentent un module d'Young supérieure au module d'Young des deuxièmes torons (10).

10. Aube (3) selon l'une des revendications 1 à 9, dans laquelle l'allongement à la rupture des deuxièmes torons (10) est compris entre 1.5 et 3 fois l'allongement à la rupture des premiers torons (9).

11. Aube (3) selon l'une des revendications 1 à 10, dans laquelle les premiers torons (9) comprennent des fibres de carbone ou d'aramide dont le module d'Young est supérieur à 250 GPa et l'allongement à la rupture est compris entre 1.5 % et 2.5 %.

12. Aube (3) selon l'une des revendications 1 à 11, dans laquelle l'allongement à la rupture des deuxièmes torons (10) est compris entre 3 % et 6 %, de préférence entre 4 % et 5 %.

13. Aube (3) selon la revendication 12, dans laquelle les deuxièmes torons (10) comprennent des fibres de verre ou des fibres d'aramide ou des fibres de basalte.

14. Aube (3) selon l'une des revendications 1 à 13, dans laquelle les deuxièmes torons (10) comprennent des fils de chaîne et/ou des fils de trame.

15. Soufflante (1) pour une turbomachine comprenant une pluralité d'aubes (3) conformes à l'une des revendications 1 à 14.

**Patentansprüche**

1. Schaufel (3) eines Gebläses (1) einer Turbomaschine mit einer Struktur aus Verbundmaterial, die eine durch dreidimensionales Weben erhaltene Faserverstärkung (5) und eine Matrix umfasst, in die die Faserverstärkung (5) eingebettet ist, wobei die Faserverstärkung (5) erste Litzen (9) mit einer vordefinierten Bruchdehnung umfasst, wobei die Schaufel (3) ferner einen Fuß (6) und eine Spitze (8) umfasst, wobei die Faserverstärkung (5) einen ersten Abschnitt (11), der den Fuß (6) umfasst, und einen zweiten Abschnitt (12), der die Spitze (8) umfasst, umfasst, ein Teil der Faserverstärkung (5) zweite Litzen (10) umfasst, die eine höhere Bruchdehnung als die ersten Litzen (9) aufweisen, wobei die Schaufel **dadurch gekennzeichnet ist, dass** der erste Abschnitt (11) frei von zweiten Litzen ist, während der zweite Abschnitt (12) die zweiten Litzen (10) umfasst.

2. Schaufel (3) nach Anspruch 1, wobei der zweite Abschnitt (12) Kettstränge und Schussstränge umfasst, wobei die Kettstränge und/oder die Schussstränge des zweiten Abschnitts (12) keine ersten Stränge (9) aufweisen.

3. Schaufel (3) nach einem der Ansprüche 1 oder 2, wobei sich der erste Abschnitt (11) über eine Strecke erstreckt, die mindestens 30 % einer Höhe (h) der Schaufel (3) entspricht, z. B. über eine Strecke zwischen 30 % und 65 % der Höhe (h) der Schaufel (3).

4. Schaufel (3) nach einem der Ansprüche 1 bis 3, wobei die Faserverstärkung (5) einen dritten Abschnitt (13) umfasst, der sich zwischen dem ersten Abschnitt (11) und dem zweiten Abschnitt (12) erstreckt, wobei eine Dichte der zweiten Litzen (10) in dem dritten Abschnitt (13) von dem ersten Abschnitt (11) zu dem zweiten Abschnitt (12) allmählich zunimmt.

5. Schaufel (3) nach Anspruch 4, wobei sich der dritte Abschnitt (13) über einen Abstand (h3) zwischen 5 % und 30 % einer Höhe (h) der Schaufel (3) erstreckt.

6. Schaufel (3) nach einem der Ansprüche 4 oder 5, wobei sich der dritte Abschnitt (13) über eine Strecke (h3) zwischen 1 cm und 10 cm erstreckt.

7. Schaufel (3) nach einem der Ansprüche 4 bis 6, wobei die Faserverstärkung (5) durch dreidimensionales Weben von Kettsträngen und Schusssträngen erhalten wird, wobei die Kettstränge eine Vielzahl von (C1-C4)-Kettebenen definieren, jede Kettenebene (C1-C4) der Faserverstärkung (5) von einer unmittelbar benachbarten Kettenebene (C1-C4) durch eine Reihe von Schusssträngen (L1-L12) getrennt ist, wobei höchstens 30 % der Kettstränge und/oder Schussstränge des dritten Abschnitts zwischen zwei unmittelbar benachbarten Kettenebenen (C1-C4) modifiziert sind.

8. Schaufel (3) nach Anspruch 7, wobei zwischen 5 % und 15 % der Kettstränge und/oder Schussstränge des dritten Abschnitts zwischen zwei unmittelbar benachbarten (C1-C4)-Kettebenen modifiziert sind.

9. Schaufel (3) nach einem der Ansprüche 1 bis 8, wobei die ersten Litzen (9) einen Elastizitätsmodul aufweisen, der größer ist als der Elastizitätsmodul der zweiten Litzen (10).

**10.** Schaufel (3) nach einem der Ansprüche 1 bis 9, wobei die Bruchdehnung der zweiten Litzen (10) zwischen dem 1,5- und 3-fachen der Bruchdehnung der ersten Litzen (9) liegt.

**11.** Schaufel (3) nach einem der Ansprüche 1 bis 10, wobei die ersten Litzen (9) Kohlenstoff- oder Aramidfasern umfassen, deren Young-Modul größer als 250 GPa ist und deren Bruchdehnung zwischen 1,5 % und 2,5 % liegt.

**12.** Schaufel (3) nach einem der Ansprüche 1 bis 11, wobei die Bruchdehnung der zweiten Litzen (10) zwischen 3 % und 6 %, vorzugsweise zwischen 4 % und 5 %, liegt.

**13.** Schaufel (3) nach Anspruch 12, wobei die zweiten Litzen (10) Glasfasern oder Aramidfasern oder Basaltfasern umfassen.

**14.** Schaufel (3) nach einem der Ansprüche 1 bis 13, wobei die zweiten Litzen (10) Kettfäden und/oder Schussfäden umfassen.

**15.** Fan (1) für eine Turbomaschine mit einer Vielzahl von Schaufeln (3) gemäß einem der Ansprüche 1 bis 14.

**Claims**

**1.** Blade (3) for a fan (1) of a turbomachine comprising a composite material structure comprising a fibrous reinforcement (5) obtained by three-dimensional weaving and a matrix in which the fibrous reinforcement (5) is embedded, the fibrous reinforcement (5) comprising first strands (9) having a predefined elongation at break, said blade (3) further comprising a root (6) and a tip (8), the fibrous reinforcement (5) comprising a first portion (11) comprising the root (6) and a second portion (12) comprising the tip (8), a part of the fibre reinforcement (5) comprising second strands (10) having an elongation at break greater than that of the first strands (9), the blade being **characterised in that** the first portion (11) is deprived of second strands while the second portion (12) comprises the second strands (10).

**2.** Blade (3) according to claim 1, wherein the second portion (12) comprises warp strands and weft strands, the warp strands and/or weft strands of said second portion (12) being deprived of first strands (9).

**3.** A blade (3) according to one of claims 1 or 2, wherein the first portion (11) extends over a distance equal to at least 30% of a height (h) of the blade (3), for example over a distance of between 30% and 65% of the height (h) of the blade (3).

**4.** A blade (3) according to one of claims 1 to 3, wherein the fibre reinforcement (5) comprises a third portion (13) extending between the first portion (11) and the second portion (12), a density of the second strands (10) increasing progressively in the third portion (13) from the first portion (11) towards the second portion (12).

**5.** A blade (3) as claimed in claim 4, wherein the third portion (13) extends over a distance (h3) of between 5% and 30% of a height (h) of the blade (3).

**6.** Blade (3) according to one of claims 4 or 5, wherein the third portion (13) extends over a distance (h3) of between 1 cm and 10 cm.

**7.** A blade (3) according to one of claims 4 to 6, wherein the fibrous reinforcement (5) is obtained by three-dimensional weaving of warp strands and weft strands, said warp strands defining a plurality of warp planes (C1-C4), each warp plane (C1-C4) of the fibrous reinforcement (5) being separated from an immediately adjacent warp plane (C1-C4) by a line of weft strands (L1-L12), at most 30% of the warp strands and/or weft strands of the third portion being modified between two immediately adjacent warp planes (C1-C4).

**8.** Blade (3) according to claim 7, wherein between 5% and 15% of warp strands and/or weft strands of the third portion are modified between two immediately adjacent warp planes (C1-C4).

**9.** Blade (3) according to one of claims 1 to 8, wherein the first strands (9) have a Young's modulus greater than the Young's modulus of the second strands (10).

**10.** Blade (3) according to one of claims 1 to 9, wherein the elongation at break of the second strands (10) is between 1.5 and 3 times the elongation at break of the first strands (9).

**11.** Blade (3) according to one of claims 1 to 10, wherein the first strands (9) comprise carbon or aramid fibres whose Young's modulus is greater than 250 GPa and whose elongation at break is between 1.5% and 2.5%.

**12.** Blade (3) according to one of claims 1 to 11, wherein the elongation at break of the second strands (10) is between 3% and 6%, preferably between 4% and 5%.

**13.** A blade (3) according to claim 12, wherein the second strands (10) comprise glass fibres or aramid fibres or basalt fibres.

14. Blade (3) according to one of claims 1 to 13, wherein the second strands (10) comprise warp yarns and/or weft yarns.

15. A fan (1) for a turbomachine comprising a plurality of blades (3) in accordance with one of claims 1 to 14.

FIG. 1

FIG. 2

EP 3 873 725 B1

FIG. 2a

9   9

C1

FIG. 2b

9   10

C2

FIG. 2c

C3

10   9

FIG. 2d

C4

10   10

FIG. 2e

L12 — OOOOOOO 10  C4

L11 — OOOOOOOO

L10 — OOOOO⊘OO

L9 — OOOO⊘OOO  C3

L8 — O⊘OO⊘⊘OO

L7 — O⊘⊘OOO⊘⊘O

L6 — O⊘OO⊘⊘O⊘  C2

L5 — ⊘OO⊘OO⊘O

L4 — ⊘O⊘⊘⊘O⊘O  9

L3 — ⊘O⊘⊘O⊘O⊘  C1

L2 — ⊘⊘⊘⊘⊘⊘⊘⊘

L1 — ⊘⊘⊘⊘⊘⊘⊘⊘

h3

FIG. 3

**EP 3 873 725 B1**

## RÉFÉRENCES CITÉES DANS LA DESCRIPTION

**Documents brevets cités dans la description**

- EP 3292991 A1

- WO 2006136755 A